# EUROPÄISCHE PATENTSCHRIFT

(11) **EP 2 771 698 B1**
(45) Veröffentlichungstag und Bekanntmachung des Hinweises auf die Patenterteilung: **08.09.2021**
(21) Anmeldenummer: 12794176.3
(22) Anmeldetag: 29.10.2012
(51) Int. Cl.: G01N 35/10, G01F 23/292

(54) **VORRICHTUNG UND VERFAHREN ZUR KONTROLLE EINES VOLUMENS EINER PROBE**
DEVICE AND METHOD FOR INSPECTING A VOLUME OF A SAMPLE
DISPOSITIF ET PROCÉDÉ DE CONTRÔLE DU VOLUME D'UN PRÉLÈVEMENT

(30) Priorität: 28.10.2011 DE 102011117310; 26.10.2012 WO PCT/EP2012/004488
(43) Veröffentlichungstag der Anmeldung: 03.09.2014
(73) Patentinhaber: Aeneas GmbH & Co. KG, 55234 Wendelsheim (DE)
(72) Erfinder: SCHIMON, Hans-Peter, 73092 Heiningen (DE); BLECKEN, Jens, 55546 Fürfeld (DE); WULF, Markus, 55232 Alzey (DE); MATTHIAS, Torsten, 55234 Wendelsheim (DE)
(74) Vertreter: Pösentrup, Judith
(86) Internationale Anmeldenummer: PCT/EP2012/004524
(87) Internationale Veröffentlichungsnummer: WO 2013/060480

(56) Entgegenhaltungen:
- EP-A1- 2 133 668
- WO-A1-99/42841
- DE-A1- 10 215 270
- US-A1- 2007 021 929
- US-A1- 2009 280 572
- None

## Beschreibung

Die Erfindung betrifft eine Vorrichtung und ein Verfahren zur Kontrolle eines Volumens und/oder der Zusammensetzung einer Probe, wobei in einer Pipette zwischen der Probe und einem an die Probe angrenzenden ersten Fluid eine Grenzfläche ausgebildet ist, die außerhalb der Pipette als im Wesentlichen horizontal verlaufende Grenzlinie zwischen der Probe und dem ersten Fluid optisch wahrnehmbar ist. Die Erfindung betrifft ferner die Verwendung einer Kamera mit einer Markierung im Bildfeld der Kamera zum Durchführen eines solchen Verfahrens.

In DE 10 2008 022 835 B3 ist eine Vorrichtung als Analysegerät zum Untersuchen von biologischen oder chemischen Proben mittels einer über eine Pipette zugeführten Reagenzflüssigkeit beschrieben. Auf einer Grundplatte ist eine Arbeitsplatte drehbar gelagert horizontal angeordnet zur Aufnahme der Proben in einen Probenhalter, beispielsweise eine Mikrotiterplatte, die mehrere Näpfchen zur Aufnahme der Proben aufweist. Die Näpfchen werden auch als Vertiefungen, Kavitäten oder Wells, gelegentlich auch als Tröpfchen, bezeichnet. Oberhalb der Arbeitsplatte ist ein Robotermanipulator angeordnet, der einen horizontalen Tragarm mit einem Schlitten trägt, wobei an dem Schlitten ein in vertikaler Richtung bewegliches Nadelsystem befestigt ist. Das Nadelsystem umfasst mehrere Hohlnadeln als Pipetten, die gleichzeitig über einem einzelnen Well zum Stehen kommen, wobei eine der Hohlnadeln die Reagenzflüssigkeit in den Well einfüllt. Nach einer Reaktionszeit bzw. Inkubationszeit wird die Lösung aus der in dem Well befindlichen Probe und der zugeführten Reagenzflüssigkeit mittels einer zweiten Hohlnadel abgesaugt und mittels einer dritten Hohlnadel mit einer Waschlösung versehen und darauf folgend mit der zweiten Hohlnadel abgesaugt. Mit den drei Hohlnadeln wird also ein einzelner Well mit Reagenzflüssigkeit und Waschlösung versorgt. Das Analysegerät enthält selbst keine Elemente zur Auswertung der Probe bzw. Lösung in dem Well, wobei diese in einem späteren Schritt von einem Fachmann ausgewertet werden. Die Wells mit den Proben bzw. Lösungen weisen Barcodes zu deren Identifikation auf, wobei das Analysegerät in seinem hinteren Teil eine Vorrichtung zum Lesen dieser Barcodes aufweist. Die Proben erfahren bei Reaktion mit der Reagenzflüssigkeit einen Farbumschlag und/oder eine Fluoreszenz, der/die mittels eines Fotometers zur Farbmessung analysiert und/oder ausgewertet werden kann.
EP 2 133 668 A1 beschreibt eine Vorrichtung bei der mittels einer Kamera das Volumen einer Probe in einer Pipette bestimmt wird. Dazu wird ein telezentrisches optisches System verwendet und der Durchmesser der Pipette muss bekannt sein um das Volumen zu bestimmen.
DE 102 15 270 A1 beschreibt die Bestimmung des Volumens in einer Pipette mittels Lichtschranken.
US 2007/021929 A1 beschreibt die Bestimmung der Zusammensetzung einer Probe mittels eines CCD Sensors.

Aufgrund der Vielzahl herzustellender Lösungen aus einer Probe und einer Reagenzflüssigkeit, die im Rahmen ganzer Testserien herzustellen sind, ist es erforderlich, diese Lösungen unter stabilen Prozessbedingungen bei hoher Prozessgeschwindigkeit und unter Verwendung möglichst geringer Mengen für die Probe und die Reagenzflüssigkeit herzustellen. Außerdem sollte die Beschickung der Wells aus Kostengründen in möglichst einfacher Weise erfolgen. Das oben beschriebene Analysegerät ist insofern nachteilig, als dass das Nadelsystem mit drei Nadeln als Pipetten lediglich eine Reagenzflüssigkeit in der zu pipettierenden Menge einem Well zuführt und die zu pipettierende Menge über einen der ersten Nadel zugeordneten Antrieb eingestellt wird, der die erforderliche Prozessgenauigkeit hinsichtlich der einzustellenden Menge nur in begrenztem Umfang gewährleistet.
Die Aufgabe der Erfindung liegt daher in der Vermeidung der Nachteile des Standes der Technik, wobei die Herstellung einer Lösung aus einer Probe und einem Fluid, beispielsweise in Form einer Reagenz oder Verdünnungsflüssigkeit, unter Verwendung möglichst geringer Mengen für die Probe und das Fluid bei hoher Prozessgeschwindigkeit erfolgen soll.
Diese Aufgabe wird mit einer Vorrichtung nach Anspruch 1, einem Verfahren nach Anspruch 8 und einer Verwendung einer Kamera nach Anspruch 13 gelöst. Vorteilhafte Weiterbildungen der Erfindung sind Gegenstand der abhängigen Ansprüche. Eine erfindungsgemäße Vorrichtung zur Kontrolle eines Volumens und/oder einer Zusammensetzung einer Probe umfasst eine Pipette, in der zwischen der Probe und einem an die Probe angrenzenden ersten Fluid eine Grenzfläche ausgebildet ist, die außerhalb der Pipette als im Wesentlichen horizontal verlaufende Grenzlinie zwischen der Probe und dem ersten Fluid optisch wahrnehmbar ist. Weiter umfasst die Vorrichtung eine Kamera mit einer Markierung, die in einem Bildfeld der Kamera derart angeordnet ist, dass auf einem aufgenommenen Bild die Grenzlinie und die Markierung abgebildet werden können. Schließlich umfasst die Vorrichtung eine Auswerteeinrichtung, mit der auswertbar ist, ob in dem aufgenommenen Bild die Markierung auf Höhe der Grenzlinie liegt. Durch den Einsatz einer Kamera mit einer Markierung im Bildfeld der Kamera kann die Lage der Grenzlinie relativ zu der Pipette, beispielsweise zu einer Spitze der Pipette oder einem anderen auf die Pipette bezogenen Bezugspunkt, und damit das Volumen der Probe innerhalb der Pipette genau bestimmt werden. Da auf einem mit der Kamera aufgenommenen Bild neben der Markierung die Grenzlinie abgebildet ist, kann beispielsweise mittels eines Vergleichs des aufgenommenen Bildes mit einem oder mehreren Referenzbildern ausgewertet werden, ob die Markierung auf Höhe der Grenzlinie liegt. Die Markierung, die lediglich im Bildfeld der Kamera vorliegt, kann neben anderen Ausführungsformen als im Wesentlichen horizontal verlaufender Kontrollstrich, als Kontrollpunkt, Kontrollfleck oder Kontrollkreuz ausgebildet sein, der/das dann auf Höhe der Grenzlinie liegt, wenn die Grenzlinie mit dem Kontrollstrich fluchtet. Ein gegebenenfalls erfolgender Vergleich des aufgenommenen Bildes mit einem Referenzbild zur Auswertung kann beispielsweise dadurch erfolgen, dass die Helligkeitsstufen unterschiedlicher Pixel des aufgenommenen Bildes mit den Helligkeitsstufen unterschiedlicher Pixel des Referenzbildes, die sich an entsprechenden Positionen auf dem aufgenommenen Bild und dem Referenzbild befinden, miteinander verglichen werden und bei Übereinstimmung der Helligkeitsstufen in einem vorgegebenen Wertebereich eine Übereinstimmung der Helligkeitsstufen festgestellt wird. Dieser Musterabgleich zwischen dem aufgenommenen Bild und dem Referenzbild kann in automatisierter Form über einen PC (Personal Computer) erfolgen. Falls die Probe zu dem ersten Fluid einen hohen Kontrast aufweist und die Grenzlinie im aufgenommenen Bild in hoher Qualität abgebildet ist, kann auf einen Vergleich dieses Bildes mit einem Referenzbild verzichtet werden und die Auswertung anhand eines fest vorgegebenen Auswahl-kriteriums erfolgen.

Erfindungsgemäß wird die Pipette derart geeicht, dass bei Liegen der Markierung auf Höhe der Grenzlinie ein vorbestimmtes Volumen der Probe vorliegt, das neben der Grenzfläche von einer Spitze der Pipette begrenzt ist. Durch die Eichung der Pipette im Bereich der Pipette, die die Pipettenspitze umfasst, ist es möglich, mit lediglich einem aufgenommenen Bild festzustellen, ob ein vorbestimmtes Volumen der Probe vorliegt. Die Probe, die als Fluid, insbesondere Flüssigkeit vorliegen kann, kann auf diese Weise bereits bei einem Aufziehen in die Pipette in einer vorgegebenen Menge genau eingestellt werden. Da die Markierung als Kontrollstrich lediglich in der Kamera, genauer im Bildfeld der Kamera, angeordnet ist, kann bei Verwendung geeichter Pipetten von einer virtuellen Eichmarkierung als Eichstrich gesprochen werden. Durch die genaue Einstellung der Probenmenge bereits beim Aufziehen/Ausstoßen der Probe in/aus die/der Pipette kann eine Inline- oder Online-Kontrolle des Prozesses der Pipettierung erfolgen. Bei Verwendung einer geeichten Pipette ist bei Liegen der Markierung auf Höhe der Grenzlinie sichergestellt, dass nicht nur ein für die nachfolgende Analyse ausreichendes Probenvolumen vorhanden ist, sondern dass ein vorgegebenes Probenvolumen vorliegt, das die Analyse erlaubt und mit dem ein unnötiges überschüssiges Probenvolumen vermieden wird, das gegebenenfalls für andere Analysen benötigt wird. Als Probensubstanz kommt beispielsweise Blut, Serum und/oder Zellflüssigkeit in Betracht. Andere Substanzen für die die Probe, die als biologische oder chemische Probe vorliegen kann, sind möglich.

Erfindungsgemäß ist weiter vorgesehen, dass die Pipette derart zwischen einer Lichtquelle und der Kamera angeordnet ist, dass ein Spektrum von Lichtstrahlen der Lichtquelle von der Kamera aufgenommen werden kann, welche die Probe durchquert haben. In diesem Fall umfasst die Auswerteeinrichtung, welche die Markierung im aufgenommenen Bild mit der Lage der Grenzlinie vergleicht, zusätzliche Mittel, welche das aufgenommene Spektrum mit einem Referenzspektrum vergleicht und feststellt, ob die Zusammensetzung der Probe gemäß dem aufgenommenen Spektrum dem des Referenzspektrums entspricht.

Erfindungsgemäß ist weiter vorgesehen, dass die Pipette derart zwischen einer Lichtquelle und der Kamera angeordnet ist, dass ein Spektrum von Lichtstrahlen der Lichtquelle von der Kamera aufgenommen werden kann, die einen Meniskus und/oder einen Probenteil direkt unterhalb des Meniskus der Probe durchquert haben, der an einem Rand der Grenzfläche zu einer Innenwand der Pipette ausgebildet ist und als prismaartiges optisches Element wirkt. Erfindungsgemäß wird unter der Bezeichnung "direkt unterhalb des Meniskus" mindestens die Höhe des 0,5-fachen, insbesondere des 1,0-fachen und vorzugsweise des 1,5-fachen des Meniskuses, und höchstens die Höhe des 3-fachen, 4-fachen, insbesondere des 5-, 6-, 7-, 8-fachen, besonders bevorzugt des 10-fachen der Höhe des Meniskus verstanden. In diesem Fall ist die Auswertevorrichtung eingerichtet, mittels eines Vergleichs des aufgenommenen Spektrums mit einem Referenzspektrum auszuwerten, ob eine Zusammensetzung der Probe gemäß dem aufgenommenen Spektrum einer Zusammensetzung gemäß dem Referenzspektrum entspricht. Der Meniskus tritt als Wölbung der Grenzfläche der Probe als Fluid mit Flüssigkeitseigenschaft an dem Rand, der an die Innenwand der Pipette angrenzt, der Grenzfläche der Probe zu dem ersten Fluid auf. Lichtstrahlen einer außerhalb der Pipette angeordneten Lichtquelle, beispielsweise eine Weißlicht-Lichtquelle, durchqueren die zumindest teilweise transparente Wand der Pipette, durchlaufen danach den von der Probe gebildeten Meniskus, und werden nach Durchlaufen der Pipette von der Kamera detektiert. Hierbei wirkt der Meniskus aufgrund seiner Form als Prisma bzw. prismaartiges optisches Element, weshalb das auf den Meniskus auftreffende Licht nach Durchlaufen des Prismas in unterschiedlich verlaufende Lichtstrahlen entsprechend der Lichtfrequenz aufgespaltet wird. Da die Ablenkung der einfallenden Lichtstrahlen von ihrer Einfallsrichtung an den äußeren Kanten des Meniskus beim Durchqueren des Meniskus abhängig ist von probenspezifischen Brechungsindex der Probe, der wiederum von der Lichtfrequenz abhängt, kann bei ausreichender örtlicher Auflösung der Kamera, beispielsweise einer elektronischen Matrix-Kamera, insbesondere einer CCD (Charge Coupled Device) oder CMOS (Complementary Metal Oxid Semiconductor)-Kamera, aufgrund der örtlichen Helligkeitsverteilung auf die (chemische) Zusammensetzung der Probe geschlossen werden. Abhängig von der Anordnung der Lichtquelle, der Pipette, und der Kamera zueinander können sowohl konkave als auch konvexe Menisken einer Probe zur Feststellung der Zusammensetzung der Probe verwendet werden. Prinzipiell können zudem in der Probe gelöste Stoffe oder nicht gelöste Bestandteile der Probe, beispielsweise Verunreinigungen, auf diese Weise bestimmt werden. Zusätzlich zur Kontrolle des Volumens der Probe kann dann sichergestellt werden, dass die gewünschte Menge der Probe mit der gewünschten Zusammensetzung der Probe verwendet wird, wodurch ein wesentlicher Sicherheitsaspekt bei der Pipettierung verwirklicht wird.

Bevorzugt wird die Auswertung der Zusammensetzung der Probe dazu verwendet, festzustellen, ob in der Probe hämolytische und/oder lipämische Faktoren vorhanden sind.

Bei Verwendung von Serum oder Plasma kann auf diese Weise festgestellt werden, ob die Tests durch Lipide, Hämoglobin oder Bilirubin gestört werden. Interferenzen in erhöhten Mengen (Lipide bis zu 20 mg/mL, Hämoglobin bis zu 800 µg/mL, Bilirubin bis zu 200 µg/mL) können die Reaktionskinetik stören und verfälschen die Ergebnisse. Bei Proben mit lipämischen Bestandteilen kommen die Verfälschungen zum Teil dadurch zustande, dass die auf der Oberfläche der Proben schwimmenden Fette und/oder Lipide, welche ggf. cholesterinreiche Bestandteile enthalten, anstelle des Serums oder des Plasmas mittels der Pipette zur Volumenbestimmung vermehrt angesaugt werden. Dies kann dann zu einer Volumenverfälschung der zu bestimmenden Probe führen und somit das Analyseergebnis stören bzw. verfälschen. Erfindungsgemäß wird aus diesen Gründen die Zusammensetzung einer Probe bevorzugt an der Oberfläche durchgeführt, da sich an der Oberfläche bevorzugt die fett- und/oder lipidhaltigen Schichten abscheiden. Bevorzugt wird dabei die Messung der Zusammensetzung der Probe im Bereich der oberen Grenzlinie der Probe durchgeführt. Erfindungsgemäß ist es ebenso möglich, eine turbidimetrische Messung quer durch die Probe durchzuführen. Ebenso ist es im Sinne der Erfindung möglich, beide Messmethoden zur Bestimmung der Zusammensetzung einer Probe zu kombinieren bzw. nacheinander durchzuführen, um eine erhöhte Kontrollsicherheit zu erzielen. Im Gegensatz zur Störung und/oder Verfälschung der Messung aufgrund von fettreichen Bestandteilen einer Probe stören bzw. beeinflussen hämolytische Bestandteile einer Probe, wenn diese in einer Probe vorhanden sind, die Messung in erster Linier durch ihre roten bzw. braunen Farben und in zweiter Linie dadurch, dass bestimmte Reaktionen durch die hämolytischen Bestandteile gehemmt werden. Erfindungsgemäß ist es deshalb zweckmäßig, eine Bestimmung der Zusammensetzung einer Probe vor oder mit der Kontrolle des Volumens durchzuführen.
Erfindungsgemäß ist es ebenso möglich, mittels einer und/oder beider Messmethoden zur Bestimmung einer Zusammensetzung einer Probe ein Ausflocken der Probe festzustellen.
Durch eine präzisere Kontrolle des Volumens und der Zusammensetzung einer Probe wird ein höheres Maß an Kontrollsicherheit erreicht, was es wiederum ermöglicht, falsch-positive bzw. falsch-negative Proben zuverlässiger auszuschließen.

Ferner kann durch die Auswertung festgestellt werden, ob Plasma für Transfusionen geeignet ist oder aus gesundheitlichen Gründen verworfen werden muss. Dementsprechend wird durch Kontrolle nicht nur die Prozesssicherheit sondern auch die Herstellung und Verwendung gesundheitskonformer Substanzen sichergestellt.

In bevorzugter Ausführung ist das erste Fluid, das an die Probe angrenzt, als Gasblase, insbesondere Luftblase, ausgebildet, wobei in der Pipette die Gasblase zwischen der Probe und einem zweiten, an die Gasblase angrenzenden Fluid angeordnet ist. Durch die Anordnung der Gasblase zwischen der Probe und dem zweiten Fluid ist sichergestellt, dass die Probe von dem zweiten Fluid getrennt angeordnet ist, so dass sich die Probe und das zweite Fluid nicht vermischen. Auf diese Weise können in lediglich einer Pipette mehrere Fluide zur Pipettierung vorgesehen werden. Es ist also im Gegensatz zur Lehre, die in DE 10 2008 022 835 B3 offenbart ist, nicht mehr erforderlich, für ein zu pipettierendes Fluid eine separate Nadel, die einer Pipette entspricht, vorzusehen. Das zweite Fluid kann beispielsweise als Verdünnungsfluid zur Verdünnung der Probe oder als Vergleichsfluid zum Vergleich mit der Probe vorliegen. Prinzipiell ist es zudem möglich, dass nicht nur eine Gasblase zur Trennung der Probe vom zweiten Fluid in der Pipette vorliegt, sondern mehrere Gas- bzw. Luftblasen zur Trennung der jeweils an die Luftblasen angrenzenden Fluide. Auf diese Weise kann in lediglich einer Pipette eine Vielzahl von unterschiedlichen Fluiden in prozessstabiler Form zur Pipettierung untergebracht werden. Mit der erfindungsgemäßen Vorrichtung zur Volumenkontrolle kann insbesondere sichergestellt werden, dass neben dem Volumen der Probe auch das Volumen des zweiten Fluids genau kontrolliert bzw. eingestellt werden kann. Sofern neben der Markierung auf einem aufgenommenen Bild nicht nur die Grenzfläche zwischen dem ersten Fluid und der Gasblase, sondern auch die weitere Grenzfläche zwischen der Gasblase und dem zweiten Fluid abgebildet ist, kann in nur einem aufgenommenen Bild aufgrund der Positionierung der Markierung zur Grenzlinie zwischen Probe und Gasblase und zur weiteren Grenzlinie zwischen Gasblase und zweitem Fluid sowohl das Volumen der Probe als auch das Volumen des zweiten Fluids kontrolliert bzw. eingestellt werden.

Falls die Tiefenschärfe der zur Aufnahme des Bildes verwendeten Kamera oder andere bildgebende bzw. -verarbeitende Charakteristika und/oder Parameter [Pixelzahl, Helligkeitsübersteuerung, charakteristischer Farbübergang an Grenzschichten (indirekte Messung der Oberflächenspannung)] nicht ausreichen um sowohl die Grenzlinie zwischen Probe und Gasblase als auch die weitere Grenzlinie zwischen Gasblase und zweitem Fluid in zur Auswertung ausreichender optischer Qualität auf dem aufgenommenen Bild abzubilden, kann das Bild aus zwei Teilbildern zusammengesetzt werden. Das erste Teilbild bildet dann den Abschnitt der Pipette von dessen Spitze bis zu der Grenzlinie zwischen Probe und Gasblase ab. Das zweite Teilbild bildet den Abschnitt der Pipette mit der weiteren Grenzlinie zwischen Gasblase und zweitem Fluid ab. Zwischen der Grenzlinie und der weiteren Grenzlinie, also in der Gasblase, können Außenkanten beider Teilbilder aneinandergrenzen, so dass ein vollständiges Bild von dem Abschnitt der Pipette mit der Probe, der Gasblase und dem zweiten Fluid entsteht, in dem die Außenkanten der Pipette beim Übergang zwischen beiden Teilbildern fluchten. Durch dieses Ausrichten beider Teilbilder zueinander kann die im zweiten Teilbild abgebildete weitere Grenzlinie auf die im ersten Teilbild abgebildete Spitze der Pipette bezogen werden. Diese Ausrichtung wird erleichtert, wenn im Bereich der Gasblase die Außenkanten beider Teilbilder überlappen, da die Teilbilder so zur Deckung gebracht werden können, dass im Bereich der Überdeckung die Außenkanten der Pipette übereinanderliegen. Bei überlappenden Teilbildern wird also die Bildinformation selbst anstelle der Außenkanten der Teilbilder zur Ausrichtung der Teilbilder zueinander verwendet.

Wegen der konischen Form der Pipette im Bereich der Pipettenspitze ist es zudem möglich alternativ oder zusätzlich zu zusammengesetzten Teilbildern die Pipette zu dem Objektiv der Kamera so auszurichten, dass die dem Objektiv zugewandten Enden der Grenzlinie und der weiteren Grenzlinie gleiche oder ähnliche Abstände zum Objektiv aufweisen. In diesem Fall steht nicht die Längsachse der Pipette, sondern die dem Objektiv zugewandte Außenkante der Pipette im Wesentlichen senkrecht zur optischen Achse des Objektivs bzw. der Kamera und die dem Objektiv zugewandten Enden der Grenzlinie und der weiteren Grenzlinie weisen gleiche oder ähnliche Abstände zu einem Schnittpunkt der optischen Achse mit der dem Objektiv zugewandte Außenkante der Pipette auf. Eine Drehung der Längsachse der Pipette zur optischen Achse um den halben Konuswinkel kann erfolgen, indem die Pipette zum Objektiv oder das Objektiv zur Pipette gedreht wird, beispielsweise über einen computergesteuerten Elektromotor. Ein aus Teilbildern zusammengesetztes aufgenommenes Bild und/oder eine Drehung der Längsachse der Pipette zur optischen Achse um einen halben Konuswinkel können/kann nicht nur bei Aufnahme eines Bildes einer Grenzlinie zwischen einer Probe und einem ersten Fluid in einer Pipette, sondern auch bei einer Aufnahme eines Bildes von einem ersten Abschnitt einer ersten Pipette und eines zweiten Abschnitts einer zweiten Pipette erfolgen. An dieser Stelle wird auf die Offenbarung in der parallelen deutschen Patentanmeldung der Anmelderin dieser Anmeldung mit dem Aktenzeichen

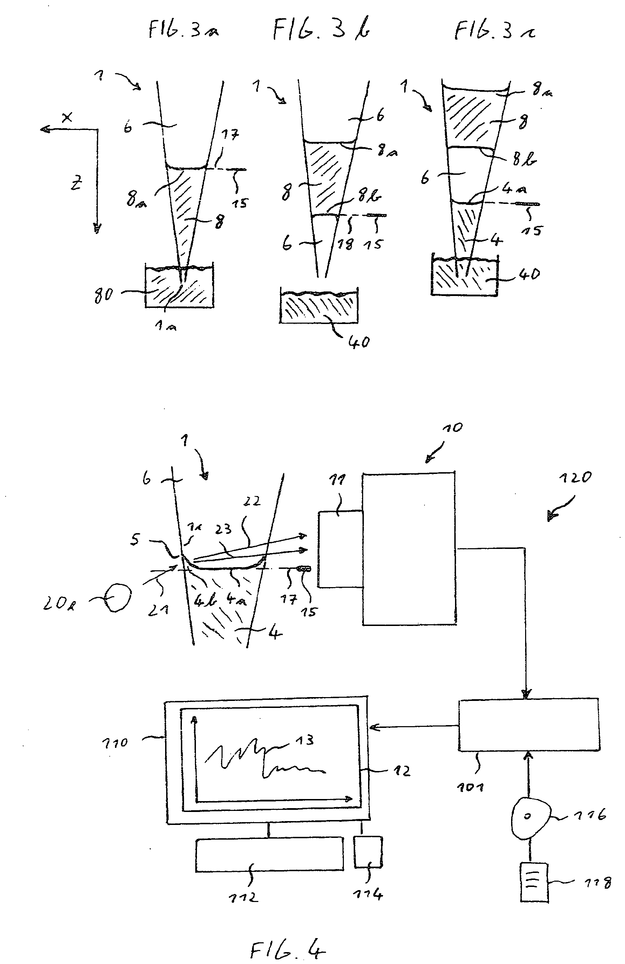

DE 10 2011 117 323.8 und internem Aktenzeichen AES 80207, auf Beschreibungsseite 8 bis 11, 17, 22-27 und in der Figur 4 verwiesen, in der ein aus Teilbildern zusammengesetztes aufgenommenes Bild und/oder eine Drehung der Längsachse der Pipette zur optischen Achse um einen halben Konuswinkel von zwei Pipetten beschrieben sind/ist und die durch Bezugnahme als Offenbarung in die vorliegende Anmeldung mit aufgenommen wird.

Eine Einstellung des Volumens der Probe, des ersten Fluids und/oder des zweiten Fluids kann dadurch erfolgen, dass die Grenzlinie zwischen Probe und erstem Fluid bzw. die Grenzlinie zwischen erstem Fluid und zweiten Fluid durch Bewegen der Probe, des ersten Fluids und/oder des zweiten Fluids relativ zu der Pipette verschoben wird. Diese Einstellung des Volumens der Probe kann während des Aufziehens bzw. Ausstoßens einer Probe, des ersten Fluids und/oder des zweiten Fluids erfolgen, wodurch die Prozesszeit zur Pipettierung verkürzt wird, anstatt diese Einstellung erst vorzunehmen, nachdem die Probe, das erste Fluid und/oder das zweite Fluid in eine Pipette aufgezogen bzw. aus einer Pipette ausgestoßen worden ist.

Erfindungsgemäß ist vorgesehen, ein Analysegerät, beispielsweise das in DE 10 2008 022 835 B3 beschriebene Analysegerät, zum Untersuchen von biologischen oder chemischen Proben mittels einer über eine Pipette zugeführten Reagenzflüssigkeit mit der erfindungsgemäßen Vorrichtung zu versehen. Durch die zusätzliche Kontrolle der Volumina der Probe, des ersten und/oder zweiten Fluids, gegebenenfalls ergänzt durch eine Kontrolle der Zusammensetzung dieser Fluide, kann eine erhöhte Prozesssicherheit und Prozessgeschwindigkeit bei hohem Automationsgrad erzielt werden.

Das erfindungsgemäße Verfahren zur Kontrolle eines Volumens einer Probe umfasst ein Bereitstellen einer Pipette, in der zwischen der Probe und einem an die Probe angrenzenden ersten Fluid eine Grenzfläche ausgebildet wird, die außerhalb der Pipette als im Wesentlichen horizontale Grenzlinie zwischen der Probe und dem ersten Fluid optisch wahrnehmbar ist, ein Anordnen einer Markierung einer Kamera in einem Bildfeld der Kamera derart, dass auf einem aufgenommenen Bild die Grenzlinie und die Markierung abgebildet werden können, und ein Auswerten, ob in dem aufgenommenen Bild die Markierung auf Höhe der Grenzlinie liegt. Die obigen Ausführungen zu der erfindungsgemäßen Vorrichtung treffen in entsprechender Weise auf das erfindungsgemäße Verfahren zu. Insofern erfolgt, wie bereits ausgeführt, bevorzugt die Auswertung während die Probe über eine Spitze der Pipette aufgezogen wird.

In einer weiteren Ausführungsform der Erfindung ist vorgesehen, in der Pipette das erste Fluid in Form einer Gasblase, insbesondere Luftblase, zwischen der Probe und einem zweiten, an die Gasblase angrenzenden Fluid anzuordnen, und ein Mischen der Probe, die in Form von Probenflüssigkeit vorliegt, mit dem zweiten Fluid dadurch zu erzielen, dass die Probe aus der Pipette ausgestoßen wird, die Gasblase zusammen mit dem zweiten Fluid ausgestoßen wird und die Probe und das zweite Fluid zum Mischen in die Pipette aufgezogen werden. Auf diese Weise kann mit lediglich einer einzelnen Pipette sowohl die Probe abgegeben als auch das zweite Fluid hinzugegeben und mit der Probe gemischt werden. Dieses Vorgehen stellt sicher, dass die Probe vollständig aus der Pipette ausgeworfen wird und eine Vermischung der Probe mit dem zweiten Fluid erfolgt. Bei Kontrolle des Volumens der Mischung aus Probe und zweitem Fluid nach dem Aufziehen der Probe und des zweiten Fluids mittels Auswertung, ob in einem aufgenommenen Bild die Markierung auf Höhe einer Grenzlinie zwischen der Mischung aus der Probe und dem zweiten Fluid und einer an die gemischte Flüssigkeit angrenzenden Luftblase liegt, kann zudem kontrolliert bzw. eingestellt werden, ob ein gewünschtes Volumen aus Probe und zweitem Fluid in gemischter Form vorliegt.

Schließlich betrifft die Erfindung die Verwendung einer Kamera mit einer Markierung im Bildfeld der Kamera zum Durchführen des erfindungsgemäßen Verfahrens. Hierbei kann jede Kamera ausreichender Qualität verwendet werden. Qualitätsparameter sind insbesondere die Auflösung der Kamera, dessen Brennweite, Apertur, Tiefenschärfe und Lichtempfindlichkeit.

Die erfindungsgemäße Vorrichtung und/oder das erfindungs-gemäße Analysegerät und/oder das erfindungsgemäße Verfahren können/kann eingesetzt werden um einen oder mehrere Wells beispielsweise einer Mikrotiterplatte in einem weiteren Bild aufzunehmen und die weiter aufgenommene Bildinformation, beispielsweise eines oder mehrerer Farbumschläge einer oder mehrerer Proben in einem oder mehreren Wells, auszuwerten. Die Bildaufnahme kann erfindungsgemäß dadurch erfolgen, dass die Kamera nach der Aufnahme des aufgenommenen Bildes von der Grenzlinie zwischen der Probe und dem ersten Fluid, die in der Pipette angeordnet sind, weg beispielsweise um im Wesentlichen 90 Grad, in Richtung des oder der Wells gedreht oder geschwenkt wird. Nachfolgend der Aufnahme des aufgenommenen Bildes kann die Kamera also zur Aufnahme eines weiteren Bildes derart gedreht oder geschwenkt werden, dass auf dem weiteren Bild ein oder mehrere Wells, in dem/denen die Probe angeordnet ist, abbildbar ist/sind. In einer Ausführungsform ist die Kamera zur Aufnahme des Bildes von der Pipette vertikal auf die Pipette und nach dieser Bildaufnahme horizontal auf einen oder mehrere unterhalb der Kamera angeordnete Wells gerichtet. Entsprechende Vorrichtungen und Verfahren zur Bildaufnahme und Auswertung eines aufgenommenen Bildes von einem oder mehreren Wells bzw. einer oder mehreren Proben, die in einen oder mehrere Wells aufgenommen sind, bei denen die erfindungsgemäße Vorrichtung und/oder das erfindungsgemäße Analysegerät und/oder das erfindungsgemäße Verfahren eingesetzt werden können, sind in den parallelen deutschen Patentanmeldungen der Anmelderin der vorliegenden Anmeldung mit dem Aktenzeichen DE 10 2011 117 311.4 mit dem internen Aktenzeichen AES 80205 und DE 10 2011 117 320.3 mit dem internen Aktenzeichen AES 80206 beschrieben, die jeweils durch Bezugnahme als Offenbarung in die vorliegende Anmeldung mit aufgenommen werden.

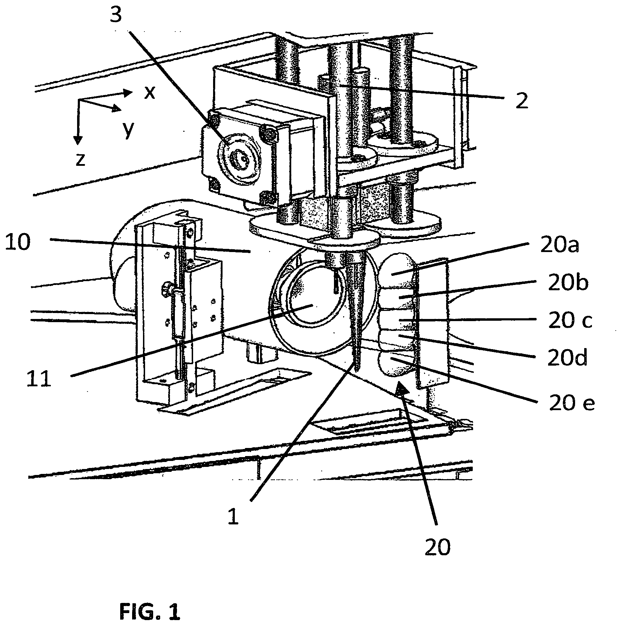

Weitere Ausführungsbeispiele sowie Vorteile der Erfindung werden nachfolgend anhand der Figuren erläutert. Zur besseren Anschaulichkeit wird in den Figuren auf eine maßstabs-/ oder proportionsgetreue Darstellung mit Ausnahme der FIG. 1 verzichtet. In den Figuren bezeichnen, sofern nicht anders angegeben, gleiche Bezugszeichen gleiche Teile mit gleicher Bedeutung. Es zeigen:
FIG. 1 in dreidimensionaler proportionsgetreuer Darstellung eine optische Anordnung aus einer Pipette, einer Kamera und einer Lichtquelle gemäß einer ersten Ausführungsform der Erfindung,
FIG. 2 eine schematische Darstellung der in FIG. 1 gezeigten Anordnung in einer Seitenansicht,
FIG. 3 in schematischer Darstellung unterschiedliche Befüllungsstadien einer Pipette, in der eine Gasblase zwischen einer Probe und einem Fluid angeordnet ist,
FIG. 4 in schematischer Darstellung die erfindungsgemäße Vorrichtung mit Pipette, Kamera und Auswerteeinrichtung für den Fall der Auswertung eines Meniskus der Probe, der an einem Rand einer Grenzfläche der Probe zu einer Innenwand der Pipette ausgebildet ist,
Fig. 5 die in Fig. 2 dargestellte Anordnung in vergrößerter Darstellung,
Fig. 6 schematisch ein aufgenommenes Bild einer befüllten Pipette, das aus zwei Teilbildern zusammengesetzt ist, und eine um den halben Konuswinkel zur Senkrechten auf die Längsachse einer Pipette gedrehte Kamera, und
FIG. 7 ein erfindungsgemäßes Verfahren, bei dem mit einer Pipette eine Probe abgegeben, ein Fluid zu der Probe hinzugegeben und die Probe mit dem Fluid gemischt wird.

In FIG. 1 ist eine optische Anordnung dargestellt, bei der eine Pipette 1, deren Längsachse in einer Z-Richtung ausgerichtet ist, zwischen einem in einer Y-Richtung ausgerichteten Kamera 10 und einer Lichtquelle 20 angeordnet ist. Die Pipette 1 ist an einem Pipettenträger 2 eines Robotermanipulators (nicht dargestellt) befestigt, wobei der Pipettenträger 2 mittels eines Motors 3 in Z-Richtung verschiebbar ist, wodurch die Pipette 1 ebenfalls in Z-Richtung verschoben werden kann. Die Kamera 10, beispielsweise eine CCD-Kamera, weist ein Objektiv 11 und ein Bildfeld auf, das ausreicht um wenigstens einen Teil eines Abschnitts der Pipette 1, der nicht über die volle Breite der Pipette in einer X-Richtung reicht, als Bild aufzunehmen. Bevorzugt kann mit der Kamera 10 ein Abschnitt der Pipette 1 über die volle Breite der Pipette in einer X-Richtung als Bild aufgenommen werden. Die Lichtquelle 20 umfasst mehrere Teillichtquellen 20a bis 20e, die auf einem gemeinsamen Träger, wie in fig. 1 dargestellt, befestigt sein können. Als Lichtquelle kommen beispielsweise eine herkömmliche Glühbirne, eine LED (Light Emitting Device), eine Gasentladungslampe, ein Laser oder andere Lichtquellen in Betracht, die zumindest teilweise das sichtbare Frequenzspektrum abdecken. Andere Frequenzbereiche des von der Lichtquelle 20 ausgestrahlten Lichtes sind möglich. Es kommen sowohl Punktlicht- oder Quasipunktlichtquellen, beispielsweise die Teillichtquellen 20a bis 20e, oder auch Flächenstrahler in als Lichtquelle 20 in Frage, wobei vorzugsweise eine vollständige Ausleuchtung über die Ausdehnung der Pipette 1 in Z-Richtung von der Spitze der Pipette 1 bis zum Pipettenträger 2 gegeben ist. Die Pipette 1 ist zumindest teilweise transparent für das von der Lichtquelle 20 erzeugte Licht, wobei das durch die Pipette transmittierte Licht auf dem Objektiv 11 der Kamera 10 auftrifft und von dieser detektiert wird. Über den Pipettenträger 2 können Leerpipetten, wie beispielsweise die Pipette 1, aus einem Leerpipetten-Speicher (nicht dargestellt) aufgenommen werden, in X-Richtung verfahren werden und Z-Richtung abgesenkt werden, um eine Probe in Form eines Fluids aus einem Well eines Probenträgers, beispielsweise einer Mikrotiterplatte, die in X-Y-Ebene unterhalb der Kamera 10 angeordnet ist (nicht dargestellt), aufzunehmen.

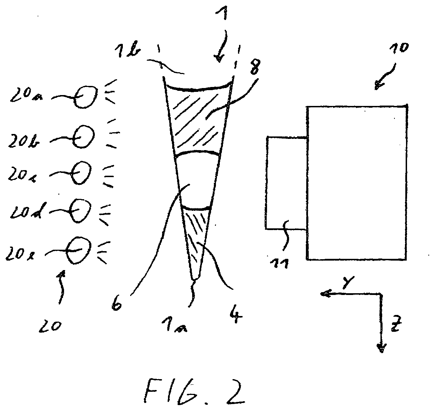

In FIG. 2 ist die in FIG. 1 dargestellte optische Anordnung aus einer Pipette 1, einer Kamera 10 und einer Lichtquelle 20 schematisch dargestellt, wobei die Pipette 1, die eine Pipettenspitze 1a in Z-Richtung und die entgegen der Z-Richtung aufgrund ihrer konischen Form eine Öffnung 1b aufweist, mit einer Probe 4, einem ersten Fluid 6 und einem zweiten Fluid 8 befüllt ist. Die Probe 4 liegt als Fluid, insbesondere Flüssigkeit, beispielsweise in Form von Blut, Serum und/oder Zellflüssigkeit vor. Das erste Fluid 6 kann als Flüssigkeit, die mit der Probe 4 möglichst nicht mischbar sein sollte, oder als Gas, insbesondere Luft, vorliegen, wobei zwischen der Probe und dem ersten Fluid eine Grenzfläche ausgebildet ist, die außerhalb der Pipette 1 als im Wesentlichen horizontal verlaufende Grenzlinie zwischen der Probe und dem ersten Fluid optisch wahrnehmbar ist. Oberhalb des ersten Fluids ist in zur Z-Richtung entgegengesetzter Richtung ein zweites Fluid 8 in der Pipette 1 angeordnet, wobei die Zusammensetzung des zweiten Fluids der Zusammensetzung der Probe 4 entsprechen oder sich von dieser unterscheiden kann. Das zweite Fluid kann beispielsweise als Verdünnungsfluid zur Verdünnung der Probe 4 oder als Vergleichsfluid zum Vergleich mit der Probe 4 vorliegen. Hierbei wird bei Ausbildung des ersten Fluids als Gas- bzw. Luftblase ein Vermischen der Probe mit dem zweiten Fluid durch die zwischen der Probe und dem zweiten Fluid angeordnete Gas- bzw. Luftblase als Trennpuffer vermieden. Auf diese Weise können in lediglich einer Pipette 1 mehrere Fluide, die zur Pipettierung vorgesehen sind, aufgenommen werden. Bei Einbringen mehrere Gas- bzw. Luftblasen in die Pipette 1 können mehr als zwei Fluide nicht mischbar in der Pipette 1 untergebracht werden. Die Pipette 1 ist zwischen der Lichtquelle 20 und der Kamera 10 in einer Durchlichtanordnung angeordnet, bei der das Licht die Pipette, die Probe und/oder das erste Fluid und/oder das zweite Fluid durchquert und von der Kamera 10 detektiert wird. Alternativ oder zusätzlich ist es auch möglich, dass die Lichtquelle 20 gegenüber der Pipette 1 auf der gleichen Seite wie die Kamera 10 angeordnet ist. In diesem Fall wird die Pipette in Y-Richtung von der Lichtquelle 20 bestrahlt und das von der Pipette 1, der Probe 4 und/oder dem ersten Fluid 6 und/oder dem zweiten Fluid 8 reflektierte Licht wird von der Kamera 10 detektiert.

In FIG. 3 sind drei Stadien der Befüllung der Pipette 1 mit der Probe 4, einem an die Probe 4 angrenzenden ersten Fluid 6 und einem an das erste Fluid angrenzenden zweiten Fluid 8 dargestellt.

In FIG. 3a ist die Pipette 1 in Z-Richtung in ein Reservoir 80 mit einer Flüssigkeit des zweiten Fluids abgesenkt. Mittels einer (nicht dargestellten) Pumpvorrichtung, die an den Pipettenträger 2 angeschlossen oder von diesem umfasst ist, ist in die Pipette 1 das zweite Fluid 8 in zur Z-Richtung entgegengesetzter Richtung aufgezogen. Oberhalb des zweiten Fluids 8 in zur Z-Richtung entgegengesetzter Richtung grenzt das Fluid 8 an eine Luftblase 6 an, die daher rührt, dass vor der Befüllung der Pipette 1 mit dem zweiten Fluid 8 die Pipette 1 als mit Luft befüllte Leerpipette vorlag. Zu der Luftblase 6 ist eine Grenzfläche des zweiten Fluids ausgebildet, die außerhalb der Pipette als im Wesentlichen horizontal verlaufende Grenzlinie 8a zwischen dem zweiten Fluid und der Luftblase 6 optisch wahrnehmbar ist. Während des Aufziehens des zweiten Fluids 8 wird mit der Kamera 10 ein Bild von der Pipette 1 derart aufgenommen, dass eine im Bildfeld der Kamera 10 angeordnete Markierung 15 der Kamera auf dem aufgenommenen Bild zusammen mit der Grenzlinie 8a abgebildet ist. Während des Aufziehens des zweiten Fluids 8 wertet eine Auswerteeinrichtung kontinuierlich aus, ob in von der Kamera 10 aufgenommenen Bildern, die in Form eines Videos vorliegen können, die Markierung 15 auf Höhe der Grenzlinie 8a liegt. Bei Ausbildung der Grenzlinie 8a als konkaver Meniskus aufgrund einer Wölbung der äußeren Bereiche der Grenzlinie 8a in zur Z-Richtung entgegengesetzter Richtung kann eine Unterseite 17 des konkaven Meniskus zur Bestimmung verwendet werden, ob die Markierung 15 (in Z-Richtung) auf Höhe der Grenzlinie 8a liegt. Sofern die Maße der Pipette 1 und Position der Pipettenspitze in Z-Richtung bestimmt sind, kann ein vorbestimmtes Volumen des zweiten Fluids 8 berechnet werden, das neben der Grenzfläche 8a von der Spitze 1a der Pipette 1 begrenzt ist. Sofern nun die Markierung 15, die in FIG. 3a als Kontrollstrich dargestellt ist, auf Höhe der Grenzlinie 8a liegt, ist bei Verwendung einer derart geeichten Pipette 1 das vorbestimmte berechnete Volumen des zweiten Fluids in der Pipette 1 aufgezogen. Alternativ zu einer Berechnung kann die Eichung der Pipette 1 auch empirisch durch Bestimmung von Volumina des zweiten Fluids abhängig vom Füllstand des zweiten Fluids 8, also der Höhe der Grenzlinie 8a in Z-Richtung, erfolgen.

In FIG. 3b ist die Pipette 1 in zur Z-Richtung entgegengesetzter Richtung aus dem Reservoir 80 herausgefahren, wobei durch Bewegen des zweiten Fluids 8 in zur Z-Richtung entgegengesetzter Richtung eine Luftblase 6 unterhalb des zweiten Fluids 8 in Z-Richtung gebildet wird. Da vorgesehen ist, dass unterhalb des zweiten Fluids 8 eine Probe 4 in Z-Richtung in der Pipette 1 angeordnet werden soll, die über die Luftblase 6 von dem zweiten Fluid getrennt sein soll, ist ein Mindestvolumen für die Luftblase 6 vorgesehen, das sicherstellt, dass die Probe 4 und das zweite Fluid 8 sich nicht mischen. Daher wird ein weiteres Bild mit der Kamera 10 aufgenommen zur Auswertung, ob die Markierung 15 in Z-Richtung auf Höhe der Grenzlinie 8b liegt, die zwischen dem zweiten Fluid 8 und der Luftblase 6 unterhalb des zweiten Fluids 8 in Z-Richtung gebildet ist. Da die Grenzlinie 8b als konvexer Meniskus ausgebildet ist, wird zur Auswertung, ob die Markierung 15 auf Höhe der Grenzlinie 8b liegt, die Oberseite 18 - anstelle der Unterseite 17 in FIG. 3a - verwendet. Neben der Kontrolle des Volumens des zweiten Fluids 8 dient die Auswertung der Grenzline 8b zwischen dem zweiten Fluid und der Luftblase 6 also zusätzlich der Kontrolle des Volumens der Luftblase 6. Bei Erreichen des gewünschten Volumens für die Luftblase 6 kann die Pipette 1 in Z-Richtung in ein Reservoir 40 mit Probenflüssigkeit herabgesenkt werden. Diese Position der Pipette 1 ist in FIG. 3c dargestellt. Durch Anheben des zweiten Fluids 8 in zur Z-Richtung entgegengesetzter Richtung mittels der Pumpvorrichtung, auch Antrieb genannt, wird Probenflüssigkeit in die Pipette 1 aufgezogen derart, dass zwischen der durch die aufgezogene Probenflüssigkeit gebildeten Probe 4 und der Luftblase 6 eine Grenzfläche ausgebildet wird, die außerhalb der Pipette als Grenzlinie 4a optisch wahrnehmbar ist. Sobald diese Grenzlinie 4a auf Höhe der Markierung 15 liegt, was von einer Auswerteeinrichtung mittels eines Vergleichs eines aufgenommenen Bildes mit einem Referenzbild festgestellt werden kann, werden die Probe 4 und das zweite Fluid 8 von der Pumpvorrichtung nicht mehr relativ zu der Pipette 1 bewegt und die Pipette 1 aus dem Reservoir 40 in zur Z-Richtung entgegengesetzter Richtung herausgefahren. Auf diese Weise liegen in der Pipette 1 für das Volumen der Probe 4, das Volumen der Luftblase 6 und das Volumen des zweiten Fluids 8 vorbestimmte Werte vor.

In FIG. 4 ist die erfindungsgemäße Vorrichtung 120 zur Kontrolle des Volumens der Probe 4 dargestellt, wobei eine Lichtquelle 20e, die als im Wesentlichen punktförmige Lichtquelle ausgebildet sein kann, einen Lichtstrahl 21 in Richtung der Pipette 1 aussendet, der einen Meniskus 4b der Probe 4 durchquert, der an einem Rand 5 der Grenzfläche zu einer Innenwand 1c der Pipette 1 ausgebildet ist. Der Meniskus 4b ist als konkaver Meniskus durch Wölbung der Grenzfläche der Probe 4 zum ersten Fluid 6 ausgebildet. Der Meniskus 4b wirkt als Prisma oder als prismaartiges optisches Element derart, dass der in den Meniskus 4b eintretende Lichtstrahl 21 beim Austritt aus dem Meniskus 4b in Lichtstrahlen 22, 23 abgelenkt bzw. gebrochen wird, die abhängig von ihrer Frequenz in einem unterschiedlichen Winkel zu der Einfallsrichtung des Lichtstrahls 21 auf das Objektiv 11 der Kamera 10 auftreffen. So weist beispielsweise der Lichtstrahl 22 zu einer Linie der Unterseite 17 des Meniskus 4b, die der optischen Achse des Objektivs 11 entspricht, einen größeren Winkel auf, als der Lichtstrahl 23. Durch eine ortsaufgelöste Auswertung der Helligkeitsverteilung in einem von der Kamera 10 aufgenommenen Bild 12 kann das Spektrum 13 der den Meniskus 4b bildenden Probe 4 bestimmt werden. Da nun der Brechungsindex der Probe 4 von der Frequenz des auf den Meniskus 4b der Probe 4 eintreffenden Lichtes der Lichtquelle 20e abhängt, wird durch den als prismaartiges optisches Element wirkenden Meniskus 4b ein Spektrum erzeugt, das charakteristisch für die insbesondere chemische Zusammensetzung der Probe 4 ist. Mittels eines Vergleichs des aufgenommenen Spektrums 13 mit einem Referenzspektrum kann die Auswertevorrichtung 101 feststellen, ob die Zusammensetzung der Probe 4 gemäß dem aufgenommenen Spektrum 13 einer Zusammensetzung gemäß dem Referenzspektrum entspricht. Es kann nun durch die Bestimmung des Spektrums der Probe 4 bestimmt werden, ob in der Probe 4 hämolytische und/oder lipämische Faktoren vorhanden sind. Diese Faktoren entstehen bei einer nicht sauberen Aufarbeitung beispielsweise eines Serums und sind der Funktion der Probe bzw. der Analyse der Probe abträglich und daher unerwünscht. Daher kann mittels des Spektrums der Probe 4 festgestellt werden ob die Probe 4 verwertbar ist. Das Ergebnis über die Verwertbarkeit der Probe 4 kann unmittelbar nach der Bestimmung des Spektrums und/oder nach Vorliegen des die Probe 4 betreffenden Analyseergebnisses ausgegeben bzw. ausgedruckt werden. Hierzu ist die Auswertungseinrichtung 101, die in Soft- und/oder Hardware auf einem Computer oder PC ausgeführt sein kann, mit einem Monitor 110 verbunden, auf dem das aufgenommene Bild 12 der Kamera 10 darstellbar ist. Die Auswerteeinrichtung 101 kann über eine Tastatur 112 und/oder eine Maus 114 bedient werden. Mittels einer geeigneten, auf dem Computer, der als Auswerteeinrichtung 101 dient, lauffähigen Software bzw. einem Computerprogramm 116, das beispielsweise auf einer CD, einer DVD oder einem Speicherstick 118 als Datenträger gespeichert sein kann, werden die mittels der Markierung 15 bestimmten Volumina der in der Pipette 1 befindlichen Probe 4 und/oder der ersten und zweiten Fluide 6, 8 und/oder die Zusammensetzungen der Probe 4, des ersten Fluids 6 und des zweiten Fluids 8 mittels Auswertung der von der Kamera 10 aufgenommenen Bilder bestimmt.

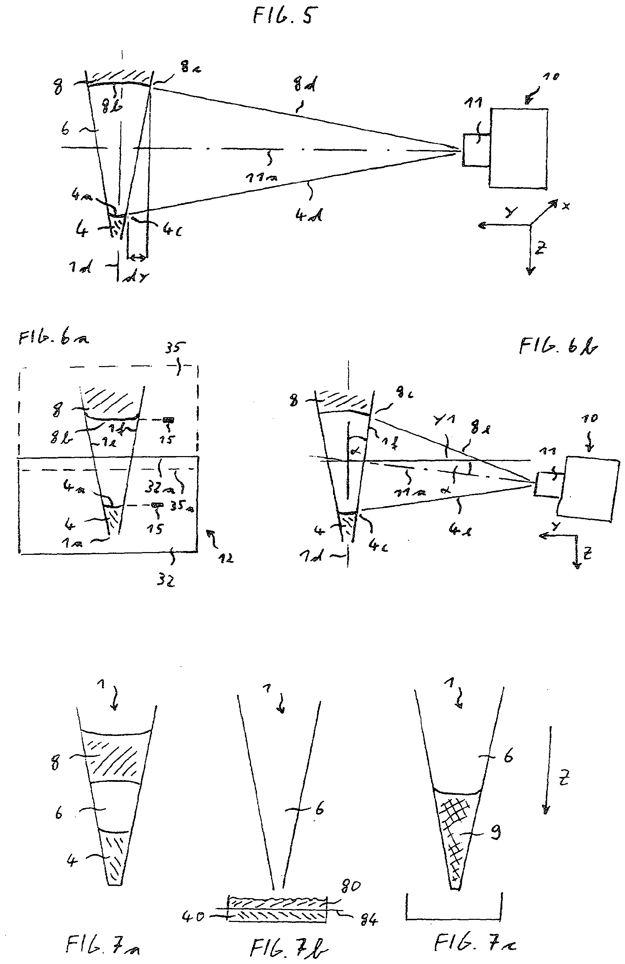

In Fig. 5 ist die in Fig. 2 gezeigte Anordnung aus einer Pipette 1 und Kamera 10 in vergrößerter Darstellung gezeigt. Die Pipette 1 weist eine in Z-Richtung orientierte Längsachse 1d und eine konische Form auf, wobei eine optische Achse 11a des Objektivs 11 bzw. der Kamera 10 in Y-Richtung, also senkrecht zur Längsachse 1d der Pipette ausgerichtet ist. Die Grenzlinie 8b zwischen zweitem Fluid 8 und erstem Fluid 6 in Form einer Gasblase weist einen dem Objektiv 11 bzw. der Kamera 10 zugewandten Punkt 8c in einem Abstand 8d zum Objektiv 11 auf. Die Grenzlinie 4a zwischen der Probe 4 und dem erste Fluid 6 weist einen dem Objektiv 11 bzw. der Kamera 10 zugewandten Punkt 4c in einem Abstand 4d zum Objektiv 11 auf. Der Abstand 4c ist in Y-Richtung um den Wert dy größer als der Abstand 8d aufgrund der konischen Form der Pipette 1. Der Wert dy ist umso größer, je weiter die Grenzlinie 8b zwischen zweitem Fluid 8 und erstem Fluid 6 und die Grenzlinie 4a zwischen der Probe 4 und erstem Fluid 6 in Z-Richtung voneinander beabstandet sind und je größer der Konuswinkel der Pipette 1 ist.

Falls die Tiefenschärfe der zur Aufnahme des Bildes 12 verwendeten Kamera 10 kleiner als der Wert dy ist und nicht ausreicht um sowohl die Grenzlinie 4a zwischen der Probe 4 und dem ersten Fluid 6 als auch die weitere Grenzlinie 8b zwischen dem ersten Fluid 6 und dem zweitem Fluid 8 in zur Auswertung ausreichender optischer Qualität auf dem aufgenommenen Bild abzubilden, kann das Bild 12 - wie in Fig. 6a dargestellt - aus zwei Teilbildern 32,35 zusammengesetzt werden. Das erste Teilbild 32 bildet den Abschnitt der Pipette 1 von dessen Spitze 1a bis zu der Grenzlinie 4a zwischen Probe 4 und erstem Fluid 6 ab. Das zweite Teilbild 35 bildet den Abschnitt der Pipette 1 mit der weiteren Grenzlinie 8b zwischen erstem Fluid 6 und zweitem Fluid 8 ab. Zwischen beiden Grenzlinie 4a, 8b, also in der Gasblase des ersten Fluids 6, können Außenkanten 32a, 35a beider Teilbilder 32, 35 aneinandergrenzen, so dass ein vollständiges Bild von dem Abschnitt der Pipette 1 mit der Probe 4, dem ersten Fluid 6 und dem zweiten Fluid 8 entsteht, in dem Außenkanten 1e, 1f der Pipette 1 beim Übergang zwischen beiden Teilbildern 32, 35 fluchten. Durch dieses Ausrichten beider Teilbilder 32, 35 zueinander kann die im zweiten Teilbild 35 abgebildete weitere Grenzlinie 8b auf die im ersten Teilbild 32 abgebildete Spitze 1a der Pipette 1 bezogen werden. Diese Ausrichtung wird erleichtert, wenn im Bereich der Gasblase des ersten Fluids 6 die Außenkanten 32a, 35a beider Teilbilder 32, 35 überlappen, da die Teilbilder 32, 35 so zur Deckung gebracht werden können, dass im Bereich der Überdeckung, also zwischen der Außenkante 32a des ersten Teilbildes 32 und der Außenkante 35a des zweiten Teilbildes 35 die Außenkanten 1e, 1f der Pipette 1 übereinanderliegen wie in Fig. 6a dargestellt. Bei überlappenden Teilbildern 32, 35 wird also die Bildinformation selbst anstelle der Außenkanten 32a, 35a der Teilbilder 32, 35 zur Ausrichtung der Teilbilder 32, 35 zueinander verwendet. Da das erste Teilbild 32 in einer X-Z-Ebene mit dem Punkt 4c der Grenzlinie 4a zwischen Probe 4 und erstem Fluid 6 liegt und das zweite Teilbild 35 in einer X-Z-Ebene mit dem Punkt 8c der Grenzlinie 8b zwischen erstem Fluid 6 und zweitem Fluid 8 liegt, sind beide Teilbilder 32, 35 in zur Auswertung geeigneter Qualität unabhängig oder quasi unabhängig von der Tiefenschärfe der Kamera 10 aufnehmbar.

Ein zur Auswertung geeignetes aufgenommenes Bild 12 bei geringer Tiefenschärfe der Kamera 10 kann alternativ oder zusätzlich zu zusammengesetzten Teilbildern 32, 35 erhalten werden, wenn die Pipette 1 zu dem Objektiv 11 der Kamera 10 so auszurichtet wird, dass die dem Objektiv 11 zugewandten Punkte 4c, 8c der Grenzlinien 4a, 8b zwischen Probe 4, erstem 6 und zweitem Fluid 8 gleiche oder ähnliche Abstände 4e, 8e zum Objektiv 10 aufweisen wie dies in Fig. 6b dargestellt ist. In diesem Fall steht nicht die Längsachse 1d der Pipette 1, sondern die dem Objektiv 11 zugewandte Außenkante 1f der Pipette 1 im Wesentlichen senkrecht zur optischen Achse 11a des Objektivs 11 bzw. der Kamera 10, wobei die dem Objektiv 11 zugewandten Punkte 4c, 8c. der Grenzlinien 4a, 8b zwischen Probe 4, erstem 6 und zweitem Fluid 8 gleiche oder ähnliche Abstände zu einem Schnittpunkt der optischen Achse 11a mit der dem Objektiv zugewandte Außenkante 1f der Pipette 1 aufweisen. Eine Drehung einer Senkrechten Y1 auf die Längsachse 1d der Pipette 1 zur optischen Achse 11a um den halben Konuswinkel α kann erfolgen, indem die Pipette 1 gegenüber dem Objektiv 11 oder wie in Fig. 6b dargestellt das Objektiv 11 gegenüber der Pipette 1 gedreht wird, beispielsweise über einen computergesteuerten Elektromotor. Die in Fig. 6b dargestellt Drehung des Objektivs 11 um den halben Konuswinkel α hat den Vorteil, dass sich die Grenzlinien 4a, 8b in der Pipette 1 nicht verschieben aufgrund einer Drehung der Pipette 1, wodurch die Grenzlinien auf dem aufgenommenen Bild 12 möglicherweise in höherer Qualität, beispielsweise bei Proben 4 und/oder Fluiden 6, 8 hoher Viskosität, abgebildet sind als bei einer gedrehten Pipette 1.

In FIG. 7 sind drei Stadien der Pipette 1 dargestellt, die durchlaufen werden um mit einer Pipette die Probe 4 abzugeben, der Probe 4 ein zweites Fluid 8 hinzuzugeben und die Probe 4 mit dem zweiten Fluid 8 zu mischen.

In FIG. 7a liegt die Probe 4 als Probenflüssigkeit, das erste Fluid 6 als Gas- bzw. Luftblase und das zweite Fluid 8 als Flüssigkeit vor. Hierbei ist die Gas- bzw. Luftblase zwischen der Probenflüssigkeit der Probe 4 und der Flüssigkeit des zweiten Fluids 8 angeordnet. In ein (nicht dargestelltes) Reservoir wird nun nacheinander die Probenflüssigkeit der Probe 4 und die Flüssigkeit des zweiten Fluids 8 hineingegeben, wobei sich zwischen dem Reservoir 40 der Probenflüssigkeit und dem Reservoir 80 der Flüssigkeit eine Grenzschicht 84 ausbildet. Die nicht vorhandene oder nicht vollständige Mischung der Probenflüssigkeit der Probe 4 und der Flüssigkeit des zweiten Fluids 80 kann unterschiedliche Gründe, beispielsweise unterschiedliche oder zu hohe Viskositäten der Probe 4 und/oder des zweiten Fluids 8 haben. Nach Auswerfen der Probe 4 und des zweiten Fluids 8 ist in der Pipette 1 lediglich Luft oder ein anderes Gas gemäß der Prozessumgebung - wie in FIG. 7b dargestellt - vorhanden. Zur Mischung der Probe 4 mit dem zweiten Fluid ist nun erfindungsgemäß vorgesehen, das Reservoir 40 der Probenflüssigkeit der Probe 4 und das Reservoir 80 der Flüssigkeit des zweiten Fluids 8 in die Pipette 1 aufzusaugen. Hierzu wird die Pipette in Z-Richtung beispielsweise in einen Well einer Mikrotiterplatte mit dem Reservoir 40 der Probenflüssigkeit und dem Reservoir 80 der Flüssigkeit bewegt, und anschließend werden beide Reservoire 40, 80 aus dem Well (nicht dargestellt) in zur Z-Richtung entgegengesetzter Richtung abgesaugt. Wie in FIG. 7c dargestellt sind nun sowohl die Probe 4, als auch das zweite Fluid 8 als Mischflüssigkeit 9 in der Pipette 1 aufgezogen. Die Mischung findet also nicht bzw. nicht ausschließlich beim Auswerfen der Probe 4 und der zweiten Flüssigkeit 8 statt, sondern vollzieht sich erst durch das Aufziehen der Probe 4 und des zweiten Fluids 8 in die Pipette 1. Zur Abgabe der Mischflüssigkeit 9 wird diese nach dem Aufziehen in die Pipette 1 in den gleichen Well, in dem zuvor die Probe 4 und das zweite Fluid 8 abgegeben wurden, oder in einen anderen Well abgegeben. Falls der zu erzielende Mischgrad nicht erreicht ist, kann nach dem Auswerfen der Mischflüssigkeit 9 in den Well die Mischflüssigkeit 9 ein zweites Mal in die Pipette 1 aufgenommen werden. Die Abgabe und Aufnahme der Mischflüssigkeit 9 kann mehrfach und prinzipiell beliebig oft wiederholt werden, bis der gewünschte Mischungsgrad erreicht ist.

## Patentansprüche

1. Vorrichtung (120) zur Kontrolle eines Volumens und/oder einer Zusammensetzung einer Probe (4), umfassend
- eine Pipette (1), in der zwischen der Probe (4) und einem an die Probe (4) angrenzenden ersten Fluid (6) eine Grenzfläche ausgebildet ist, die außerhalb der Pipette (1) als im Wesentlichen horizontal verlaufende Grenzlinie (4a) zwischen der Probe (4) und dem ersten Fluid (6) optisch wahrnehmbar ist,
- eine Kamera (10) mit einer Markierung (15), die derart in einem Bildfeld der Kamera (10) angeordnet ist, dass auf einem aufgenommenen Bild (12) die Grenzlinie (4a) und die Markierung (15) abgebildet werden können, wobei die Pipette (1) derart zwischen einer Lichtquelle (20, 20a-20e) und der Kamera (10) angeordnet ist, dass ein Spektrum (13) von Lichtstrahlen (22-24) der Lichtquelle (20, 20a-20e) von der Kamera (10) aufgenommen werden kann, welche die Probe (4) durchquert haben, und
- eine Auswerteeinrichtung (101), welche die Markierung (15) im aufgenommenen Bild (12) mit der Lage der Grenzlinie (4a) vergleicht und/oder wobei die Auswertevorrichtung (101) zusätzliche Mittel umfasst welche das aufgenommene Spektrum (13) mit einem Referenzspektrum vergleicht und feststellt, ob die Zusammensetzung der Probe (4) gemäß dem aufgenommenen Spektrum (13) dem des Referenzspektrums entspricht.

2. Vorrichtung (120) nach Anspruch 1, bei der die Pipette (1) derart geeicht ist, dass bei Liegen der Markierung (15) auf Höhe der Grenzlinie (4a) ein vorbestimmtes Volumen der Probe (4) vorliegt, das neben der Grenzfläche von einer Spitze (1a) der Pipette (1) begrenzt ist.

3. Vorrichtung (120) nach Anspruch 1 oder 2, bei der die Pipette (1) derart zwischen einer Lichtquelle (20, 20a-20e) und der Kamera (10) angeordnet ist, dass ein Spektrum (13) von Lichtstrahlen (22-24) der Lichtquelle (20, 20a-20e) von der Kamera (10) aufgenommen werden kann, die einen Meniskus (4b) und/oder einen Probenteil direkt unterhalb des Meniskus der Probe (4) durchquert haben, der an einem Rand (5) der Grenzfläche zu einer Innenwand (1c) der Pipette (1) ausgebildet ist, und
die Auswertevorrichtung (101) zusätzliche Mittel umfasst, welche das aufgenommene Spektrum (13) mit einem Referenzspektrum vergleicht und feststellt, ob die Zusammensetzung der Probe (4) gemäß dem aufgenommenen Spektrum (13) dem des Referenzspektrums entspricht.

4. Vorrichtung (120) nach einem der vorhergehenden Ansprüche, bei der das erste Fluid (6) als Gasblase, insbesondere Luftblase, ausgebildet ist, und in der Pipette (1) die Gasblase zwischen der Probe (4) und einem zweiten, an die Gasblase angrenzenden Fluid (8) angeordnet ist, wobei zwischen dem ersten Fluid (6) und dem zweiten Fluid (8) eine weitere Grenzfläche ausgebildet ist, die außerhalb der Pipette (1) als im Wesentlichen horizontal verlaufende weitere Grenzlinie (8b) zwischen dem ersten (6) und dem zweiten Fluid (8) optisch wahrnehmbar ist.

5. Vorrichtung (120) nach Anspruch 4, bei der
- entweder das aufgenommene Bild (12) aus mindestens zwei Teilbildern (32, 35) zusammengesetzt ist, wobei auf dem ersten Teilbild (32) die Grenzlinie (4a) und auf dem zweiten Teilbild (35) die weitere Grenzlinie (8b) abgebildet ist,
- oder die Pipette (1) konisch ausgeführt ist und die Kamera (10) um einen halben Konuswinkel (α) gegenüber einer Senkrechten (Y1) auf eine Längsachse (1d) der Pipette (1) gedreht ist.

6. Vorrichtung (120) nach einem der vorhergehenden Ansprüche, **dadurch gekennzeichnet, dass** die Auswertevorrichtung (101) zusätzliche Mittel umfasst, welche das aufgenommene Spektrum (13) mit einem Referenzspektrum vergleicht und feststellt, ob in der Probe (4) hämolytische und/oder lipämische Faktoren vorhanden sind.

7. Analysegerät zum Untersuchen von biologischen oder chemischen Proben (4) mittels einer über eine Pipette zugeführten Reagenzflüssigkeit mit einer Vorrichtung (120) nach einem der Ansprüche 1 bis 5.

8. Verfahren zur Kontrolle eines Volumens und/oder einer Zusammensetzung einer Probe (4), umfassend die Schritte:
- Bereitstellen einer Pipette (1), in der zwischen der Probe (1) und einem an die Probe (1) angrenzenden ersten Fluid (6) eine Grenzfläche ausgebildet wird, die außerhalb der Pipette (1) als im Wesentlichen horizontale Grenzlinie (4a) zwischen der Probe (4) und dem ersten Fluid (6) optisch wahrnehmbar ist,
- Anordnen einer Markierung (15) einer Kamera (10) in einem Bildfeld der Kamera (10) derart, dass auf einem aufgenommenen Bild (12) die Grenzlinie (4a) und die Markierung (15) abgebildet werden können, wobei die Pipette (1) derart zwischen einer Lichtquelle (20, 20a-20e) und der Kamera (10) angeordnet ist, dass ein Spektrum (13) von Lichtstrahlen (22-24) der Lichtquelle (20, 20a-20e) von der Kamera (10) aufgenommen wird, welche die Probe (4) durchquert haben,
- Auswerten, ob die Markierung (15) im aufgenommenen Bild (12) mit der Lage der Grenzlinie (4a) übereinstimmt,
- Vergleichen des aufgenommen Spektrums (13) mit einem Referenzspektrum, und
- Feststellen, ob die Zusammensetzung der Probe (4) gemäß dem aufgenommenen Spektrum (13) dem des Referenzspektrums entspricht.

9. Verfahren nach Anspruch 8, **dadurch gekennzeichnet, dass** mittels eines Vergleichs des aufgenommen Spektrums (13) mit einem Referenzspektrum festgestellt wird, ob in einer Probe (4) hämolytische und/oder lipämische Faktoren vorhanden sind.

10. Verfahren nach Anspruch 8 oder 9, **dadurch gekennzeichnet, dass**,
- die Pipette (1) derart zwischen einer Lichtquelle (20, 20a-20e) und der Kamera (10) angeordnet wird, dass ein Spektrum (13) von Lichtstrahlen (22-24) der Lichtquelle (20, 20a-20e) von der Kamera (10) aufgenommen wird, welche einen Meniskus (4b) und/oder einen Probenteil direkt unterhalb des Meniskus der Probe (4) durchquert haben, der an einem Rand (5) der Grenzfläche zu einer Innenwand (1c) der Pipette (1) ausgebildet wird,
- der aufgenommen Spektrum (13) mit einem Referenzspektrum verglichen wird, und
- festgestellt wird, ob die Zusammensetzung der Probe (4) gemäß dem aufgenommenen Spektrum (13) dem des Referenzspektrums entspricht.

11. Verfahren nach einem der vorhergehenden Ansprüche, bei dem die Auswertung erfolgt, während die Probe (4) über eine Spitze (1a) der Pipette (1) aufgezogen wird.

12. Verfahren nach einem der vorhergehenden Ansprüche, bei dem
- in der Pipette (1) das erste Fluid (6) in Form einer Gasblase, insbesondere Luftblase, zwischen der Probe (4) und einem zweiten, an die Gasblase angrenzenden Fluid (8) angeordnet wird, und
- ein Mischen der Probe (1) in Form von Probenflüssigkeit mit dem zweiten Fluid (8) dadurch erfolgt, dass
- die Probe (4) aus der Pipette (1) ausgestoßen wird,
- die Gasblase zusammen mit dem zweiten Fluid (8) ausgestoßen wird, und
- die Probe (4) und das zweite Fluid (8) zum Mischen in die Pipette (1) aufgezogen werden.

13. Verwendung einer Kamera (10) mit einer Markierung (15) im Bildfeld der Kamera (10) zum Durchführen eines Verfahrens nach einem der Ansprüche 8 bis 12.

## Claims

1. Device (120) for controlling a volume and/or a composition of a sample (4), comprising
- a pipette (1) in which an interface is formed between the sample (4) and a first fluid (6) adjacent to the sample (4), which interface is optically perceptible outside the pipette (1) as a essentially horizontally extending boundary line (4a) between the sample (4) and the first fluid (6),
- a camera (10) with a marker (15) which is arranged in an image field of the camera (10) in such a way that the boundary line (4a) and the marker (15) can be depicted on a captured image (12), wherein the pipette (1) is arranged between a light source (20, 20a-20e) and the camera (10) such that a spectrum (13) of light beams (22-24) of the light source (20, 20a-20e) can be recorded by the camera (10), which light beams have traversed the sample (4),
and
- an evaluation device (101) which compares the marker (15) in the captured image (12) with the position of the boundary line (4a)
and/or
wherein the evaluation device (101) comprises additional means which compare the recorded spectrum (13) with a reference spectrum and determine whether the composition of the sample (4) according to the recorded spectrum (13) corresponds to that of the reference spectrum.

2. Device (120) according to claim 1, wherein the pipette (1) is calibrated such that, when the marker (15) is at the level of the boundary line (4a), there is a predetermined volume of the sample (4) which is bounded by a tip (1a) of the pipette (1) next to the boundary surface.

3. Device (120) according to claim 1 or 2, wherein the pipette (1) is arranged between a light source (20, 20a-20e) and the camera (10) such that a spectrum (13) of light beams (22-24) of the light source (20, 20a-20e) can be recorded by the camera (10), which light beams have traversed a meniscus (4b) and/or a sample portion directly below the meniscus of the sample (4) formed at an edge (5) of the interface with an inner wall (1c) of the pipette (1), and
the evaluation device (101) comprises additional means which compares the recorded spectrum (13) with a reference spectrum and determines whether the composition of the sample (4) according to the recorded spectrum (13) corresponds to that of the reference spectrum.

4. Device (120) according to one of the preceding claims, in which the first fluid (6) is formed as a gas bubble, especially an air bubble, and in the pipette (1) the gas bubble is arranged between the sample (4) and a second fluid (8) adjacent to the gas bubble, wherein between the first fluid (6) and the second fluid (8) a further boundary surface is formed which is optically perceptible outside the pipette (1) as a further boundary line (8b) extending essentially horizontally between the first (6) and the second fluid (8).

5. Device (120) according to claim 4, wherein
- either the recorded image (12) is composed of at least two partial images (32, 35), wherein the boundary line (4a) is depicted on the first partial image (32) and the further boundary line (8b) is depicted on the second partial image (35),
- or the pipette (1) is designed conical and the camera (10) is rotated by half a cone angle (α) with respect to a perpendicular (Y1) to a longitudinal axis (1d) of the pipette (1).

6. Device (120) according to any one of the preceding claims, **characterised in that** the evaluation device (101) comprises additional means which compare the recorded spectrum (13) with a reference spectrum and determine whether haemolytic and/or lipaemic factors are present in the sample (4).

7. Analysis apparatus for examining biological or chemical samples (4) by means of a reagent liquid supplied via a pipette, comprising a device (120) according to any one of claims 1 to 5.

8. A method for controlling a volume and/or composition of a sample (4) comprising the steps of:
- providing a pipette (1) in which an interface is formed between the sample (1) and a first fluid (6) adjacent to the sample (1), which interface is optically perceptible outside the pipette (1) as a essentially horizontal boundary line (4a) between the sample (4) and the first fluid (6),
- arrangement of a marker (15) of a camera (10) in an image field of the camera (10) such that the boundary line (4a) and the marker (15) can be depicted on a recorded image (12), wherein the pipette (1) is arranged between a light source (20, 20a-20e) and the camera (10) such that a spectrum (13) of light beams (22-24) of the light source (20, 20a-20e) is recorded by the camera (10), which light beams have traversed the sample (4),
- evaluation of whether the marker (15) in the captured image (12) matches the position of the boundary line (4a),
- comparing the recorded spectrum (13) with a reference spectrum, and
- determining whether the composition of the sample (4) according to the recorded spectrum (13) corresponds to that of the reference spectrum.

9. Method according to claim 8, **characterised in that** it is determined by means of a comparison of the recorded spectrum (13) with a reference spectrum whether haemolytic and/or lipaemic factors are present in a sample (4).

10. Method according to claim 8 or 9, **characterized in that**,
- the pipette (1) is arranged between a light source (20, 20a-20e) and the camera (10) such that a spectrum (13) of light beams (22-24) of the light source (20, 20a-20e) is recorded by the camera (10), which light beams have traversed a meniscus (4b) and/or a sample portion directly below the meniscus of the sample (4) formed at an edge (5) of the interface with an inner wall (1c) of the pipette (1),
- the recorded spectrum (13) is compared with a reference spectrum, and
- it is determined whether the composition of the sample (4) according to the recorded spectrum (13) matches that of the reference spectrum.

11. Method according to any one of the preceding claims, in which the evaluation takes place while the sample (4) is being aspirated over a tip (1a) of the pipette (1).

12. Method according to any one of the preceding claims, wherein
- in the pipette (1), the first fluid (6) in the form of a gas bubble, especially an air bubble, is arranged between the sample (4) and a second fluid (8) adjacent to the gas bubble, and
- mixing of the sample (1) in the form of sample liquid with the second fluid (8) is effected in that
- the sample (4) is ejected from the pipette (1),
- the gas bubble is ejected together with the second fluid (8), and
- the sample (4) and the second fluid (8) are aspirated into the pipette (1) for mixing.

13. Use of a camera (10) with a marker (15) in the image field of the camera (10) for carrying out a method according to any one of claims 8 to 12.

## Revendications

1. Dispositif (120) pour le contrôle d'un volume et/ou d'une composition d'un échantillon (4), comprenant
- une pipette (1) dans laquelle une interface est formée entre l'échantillon (4) et un premier fluide (6) adjacent à l'échantillon (4), laquelle interface est optiquement perceptible à l'extérieur de la pipette (1) sous la forme d'une ligne de délimitation (4a) s'étendant essentiellement de façon horizontale entre l'échantillon (4) et le premier fluide (6),
- une caméra (10) avec un marqueur (15) disposée dans un champ d'image de la caméra (10) de telle sorte que la ligne de délimitation (4a) et le marqueur (15) peuvent être représentés sur une image capturée (12), la pipette (1) étant disposée entre une source de lumière (20, 20a-20e) et la caméra (10) de telle sorte qu'un spectre (13) de faisceaux lumineux (22-24) ayant traversé l'échantillon (4) depuis la source de lumière (20, 20a-20e) peut être enregistré par la caméra (10)
et
- un dispositif d'évaluation (101) qui compare le marqueur (15) dans l'image capturée (12) avec la position de la ligne de délimitation (4a)
et/ou
le dispositif d'évaluation (101) comprenant des éléments supplémentaires qui comparent le spectre enregistré (13) avec un spectre de référence et déterminent si la composition de l'échantillon (4) selon le spectre enregistré (13) correspond à celle du spectre de référence.

2. Dispositif (120) selon la revendication 1, dans lequel la pipette (1) est calibrée de telle sorte que, lorsque le marqueur (15) est au niveau de la ligne de délimitation (4a), il existe un volume prédéterminé de l'échantillon (4) délimité par une pointe (1a) de la pipette (1) à côté de la surface de délimitation.

3. Dispositif (120) selon la revendication 1 ou 2, dans lequel la pipette (1) est disposée entre une source de lumière (20, 20a-20e) et la caméra (10) de telle sorte qu'un spectre (13) de faisceaux lumineux (22-24) ayant traversé un ménisque (4b) et/ou une partie d'échantillon directement sous le ménisque de l'échantillon (4) depuis la source de lumière (20, 20a-20e) peuvent être enregistrés par la caméra (10), le ménisque ou l'échantillon étant formé à un bord (5) de l'interface avec une paroi interne (1c) de la pipette (1), et
que le dispositif d'évaluation (101) comprend des éléments supplémentaires qui comparent le spectre enregistré (13) avec un spectre de référence et déterminent si la composition de l'échantillon (4) selon le spectre enregistré (13) correspond à celle du spectre de référence.

4. Dispositif (120) selon l'une des revendications précédentes, dans lequel le premier fluide (6) est formé comme une bulle de gaz, en particulier une bulle d'air, et dans la pipette (1) la bulle de gaz est disposée entre l'échantillon (4) et un deuxième fluide (8) adjacent à la bulle de gaz, une autre surface de délimitation étant formée entre le premier fluide (6) et le second fluide (8) et étant optiquement perceptible à l'extérieur de la pipette (1) sous la forme d'une seconde ligne de délimitation (8b) s'étendant essentiellement de façon horizontale entre le premier (6) et le second fluide (8).

5. Dispositif (120) selon la revendication 4, dans lequel
- soit l'image capturée (12) est composée d'au moins deux images partielles (32, 35), la ligne de délimitation (4a) étant représentée sur la première image partielle (32) et la seconde ligne de délimitation (8b) étant représentée sur la seconde image partielle (35),
- soit la pipette (1) est de forme conique et la caméra (10) est tournée d'un demi-angle de cône (α) par rapport à une perpendiculaire (Y1) sur un axe longitudinal (1d) de la pipette (1).

6. Dispositif (120) selon l'une des revendications précédentes, **caractérisé en ce que** le dispositif d'évaluation (101) comprend des éléments supplémentaires qui comparent le spectre enregistré (13) à un spectre de référence et déterminent si des facteurs hémolytiques et/ou lipémiques sont présents dans l'échantillon (4).

7. Appareil d'analyse pour l'examen d'échantillons biologiques ou chimiques (4) au moyen d'un liquide réactif fourni par une pipette, comportant un dispositif (120) selon l'une des revendications 1 à 5.

8. Procédé de contrôle d'un volume et/ou d'une composition d'un échantillon (4) comprenant les étapes :
- de mise à disposition d'une pipette (1) dans laquelle une interface est formée entre l'échantillon (1) et un premier fluide (6) adjacent à l'échantillon (1), laquelle interface est optiquement perceptible à l'extérieur de la pipette (1) sous la forme d'une ligne de délimitation (4a) essentiellement horizontale entre l'échantillon (4) et le premier fluide (6),
- d' agencement d'un marqueur (15) d'une caméra (10) dans un champ d'image de la caméra (10) de telle sorte que la ligne de délimitation (4a) et le marqueur (15) peuvent être représentés sur une image capturée (12), la pipette (1) étant disposée entre une source de lumière (20, 20a-20e) et la caméra (10) de telle sorte qu'un spectre (13) de faisceaux lumineux (22-24) ayant traversé l'échantillon (4) depuis la source de lumière (20, 20a-20e) est enregistré par la caméra (10),
- d' évaluation si le marqueur (15) dans l'image capturée (12) coïncide avec la position de la ligne de délimitation (4a),
- de comparaison du spectre enregistré (13) avec un spectre de référence, et
- de constatation si la composition de l'échantillon (4) selon le spectre enregistré (13) correspond à celle du spectre de référence.

9. Procédé selon la revendication 8, **caractérisé en ce que** l'on détermine au moyen d'une comparaison du spectre enregistré (13) avec un spectre de référence si des facteurs hémolytiques et/ou lipémiques sont présents dans un échantillon (4).

10. Procédé selon la revendication 8 ou 9, **caractérisé en ce que**,
- la pipette (1) est disposée entre une source de lumière (20, 20a-20e) et la caméra (10) de telle sorte qu'un spectre (13) de rayons lumineux (22-24) ayant traversé un ménisque (4b) et/ou une partie d'échantillon directement sous le ménisque de l'échantillon (4) depuis la source de lumière (20, 20a-20e) est capté par la caméra (10), le ménisque ou l'échantillon étant formé à un bord (5) de l'interface avec une paroi intérieure (1c) de la pipette (1),
- le spectre enregistré (13) est comparé à un spectre de référence, et
- il est déterminé si la composition de l'échantillon (4) selon le spectre enregistré (13) correspond à celle du spectre de référence.

11. Procédé selon l'une des revendications précédentes, dans lequel l'évaluation a lieu pendant que l'échantillon (4) est aspiré par une pointe (1a) de la pipette (1).

12. Procédé selon l'une des revendications précédentes, dans lequel
- dans la pipette (1), le premier fluide (6) est disposé sous forme d'une bulle de gaz, en particulier d'une bulle d'air, entre l'échantillon (4) et un second fluide (8) adjacent à la bulle de gaz, et
- le mélange de l'échantillon (1) sous forme de liquide d'échantillon avec le second fluide (8) est effectué en ce que
- l'échantillon (4) est éjecté de la pipette (1),
- la bulle de gaz est éjectée en même temps que le second fluide (8), et
- l'échantillon (4) et le second fluide (8) sont aspirés dans la pipette (1) pour être mélangés.

13. Utilisation d'une caméra (10) comportant un marqueur (15) dans le champ d'image de la caméra (10) pour réaliser un procédé selon l'une des revendications 8 à 12.
